# EUROPÄISCHE PATENTANMELDUNG

(11) **EP 1 297 993 A2**
(43) Veröffentlichungstag der Anmeldung: **02.04.2003**
(21) Anmeldenummer: 02021588.5
(22) Anmeldetag: 27.09.2002
(51) Int. Cl.: B60N 2/08

(54) **Fahrzeugsitz-Baugruppe, insbesondere Kraftfahrzeugsitz-Einsteller**

(30) Priorität: 29.09.2001 DE 10148369
(71) Anmelder: Keiper GmbH & Co., 67657 Kaiserslautern (DE)
(72) Erfinder: Jost, Hermann, 67659 Kaiserlautern (DE)
(74) Vertreter: Patentanwälte Hosenthien-Held und Dr. Held

(57) **Zusammenfassung**

2. Bei einer Fahrzeugsitz-Baugruppe, insbesondere bei einem Kraftfahrzeugsitz-Einsteller, mit einem ersten Bauteil (11), welches eine axiale Richtung definiert, und einem zweiten Bauteil (20), welches an einer bestimmten Stelle des ersten Bauteils (11) in axialer Richtung fixiert ist, wobei im Gebrauch der Fahrzeugsitz-Baugruppe die beiden Bauteile (11, 20) in axialer Richtung auf Zug oder Druck beansprucht werden, sind die beiden Bauteile (11, 20) durch Verdrängen von Material (17') wenigstens eines Bauteils (11) miteinander verbunden.

## Beschreibung

Die Erfindung betrifft eine Fahrzeugsitz-Baugruppe, insbesondere einen Kraftfahrzeugsitz-Einsteller, mit den Merkmalen des Oberbegriffs des Anspruches 1.

Bei einer bekannten Fahrzeugsitz-Baugruppe dieser Art, welche als Längseinsteller für einen Kraftfahrzeugsitz dient, ist zur Verriegelung der Sitzschienen ein krallenförmiges Verriegelungselement vorgesehen, welches fest auf einem Bolzen als einem ersten Bauteil sitzt. Auf den entlang seiner axialen Richtung geführten Bolzen ist an eine bestimmte Stelle ein Sicherungsring geschoben. Über den Sicherungsring wird die durch eine Druckfeder erzeugte Schließkraft in den Bolzen und damit in das Verriegelungselement eingeleitet. Eine exakte Positionierung des Sicherungsrings ist wünschenswert, um weder einen zu hohen Mindesthub, gegen welche im Extremfall kein Entriegeln möglich ist, noch eine zu geringe Schließkraft, welche zu einem Klappergeräusche erzeugenden Spiel führt, zu bewirken. Die exakte Positionierung ist aber arbeits- und damit kostenintensiv.

Es besteht außerdem die Gefahr, daß sich die beiden Bauteile relativ zueinander nach der Montage, beispielsweise beim Transport, verschieben. Eine Erhöhung der radial wirkenden Kraft, welche den Sicherungsring fixiert, zur Vermeidung dieser Gefahr würde zu Schwierigkeiten bei der Montage führen.

Der Erfindung liegt die Aufgabe zu Grunde, eine Fahrzeugsitz-Baugruppe der eingangs genannten Art zu verbessern. Diese Aufgabe wird erfindungsgemäß durch eine Fahrzeugsitz-Baugruppe mit den Merkmalen des Anspruches 1 gelöst. Vorteilhafte Ausgestaltungen sind Gegenstand der Unteransprüche.

Dadurch, daß die beiden Bauteile durch Verdrängen von Material wenigstens eines Bauteils miteinander verbunden sind, wird eine exakte Positionierung an einer bestimmten, definierten Stelle des länglich ausgebildeten, ersten Bauteils erreicht, die sowohl hoch belastbar als auch einfach zu montieren ist. Relativverschiebungen werden verhindert. Der Widerstand gegen einseitig wirkende Kräfte wird erhöht. Die für den Gebrauch erforderlichen Maße werden exakt eingehalten. Vorzugsweise wird auch eine Relativverdrehung verhindert. Die Verbindung der beiden Bauteile ist vorzugsweise in axialer Richtung beidseitig formschlüssig, um die exakten Maße unabhängig von der Belastungsrichtung einzuhalten.

Die Verbindung der beiden Bauteile erfolgt vorzugsweise durch Vernieten, beispielsweise durch eine Ringnietung, eine Körnernietung oder eine Taumelnietung. Als bevorzugter Gegenhalt ist in einem Endabschnitt des ersten Bauteils eine in axialer Richtung wirksame Stufe ausgebildet, an welcher das als Scheibe oder Teller ausgebildete zweite Bauteil anliegt und auf der von der Stufe abgewandten Seite vernietet wird. Eine symmetrische Ausbildung der Scheibe verhindert Montagefehler aufgrund spiegelverkehrtem Zusammenbau. Das beim Nietvorgang verdrängte Material stammt vorzugsweise aus dem Endabschnitt, beispielsweise aus einer ringförmigen Wandung, einer ausgeschnittenen Materialpartie oder einem anderen Bereich des Endabschnitts. Das verdrängte Material, welches das zweite Bauteil hintergreift, wird vorzugsweise in eine Fase oder sonstige Materialtasche des zweiten Bauteils gedrängt, um die Außenmaße der miteinander verbundenen Bauteile unverändert zu lassen, insbesondere um die axiale Länge der Baugruppe durch einen Nietkopf nicht zu vergrößern.

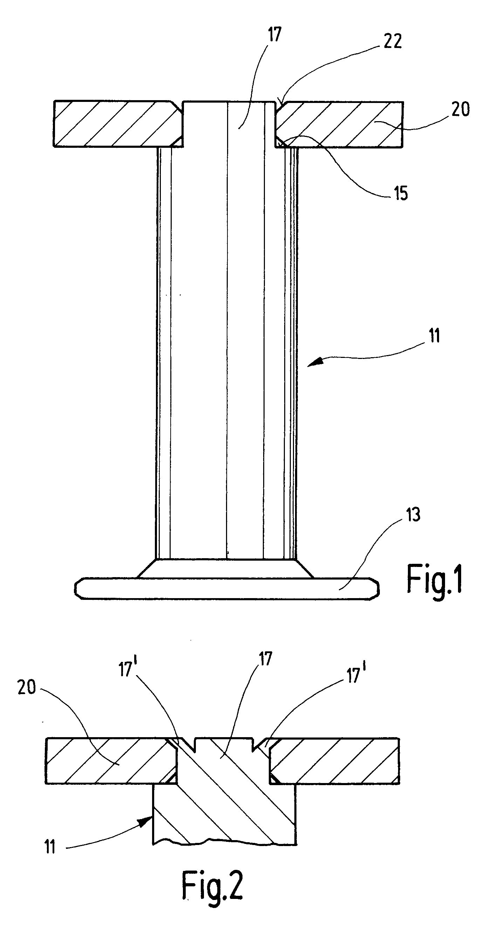

Im folgenden ist die Erfindung anhand zweier in der Zeichnung dargestellten Ausführungsbeispiele näher erläutert. Es zeigen
- Fig. 1: eine Ansicht eines Bolzens gemäß dem ersten Ausführungsbeispiel vor dem Nietvorgang,
- Fig. 2: einen Schnitt durch den Bolzen aus Fig. 1 nach dem Nietvorgang,

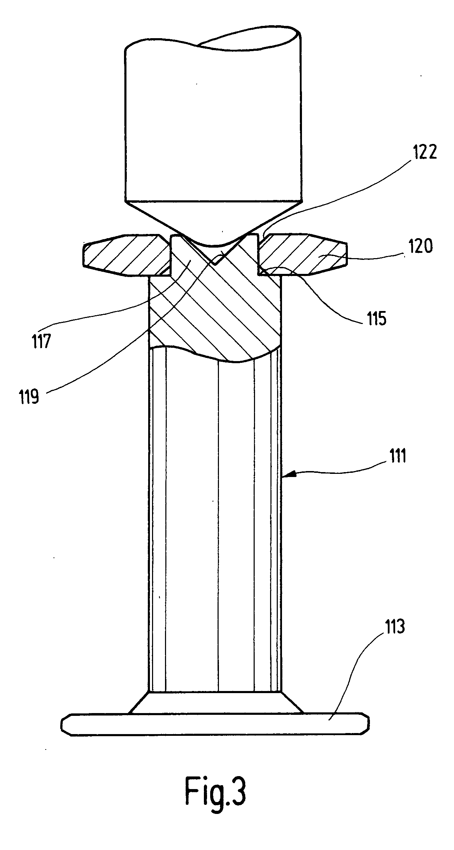

- Fig. 3: eine teilweise geschnitten dargestellte Ansicht eines Bolzens gemäß dem zweiten Ausführungsbeispiel vor dem Nietvorgang,
- Fig. 4: einen Schnitt durch das erste Ausführungsbeispiel im Bereich des Bolzens, und
- Fig. 5: eine Abwandlung des ersten Ausführungsbeispiels.

Eine Fahrzeugsitz-Baugruppe 1 ist in den Ausführungsbeispielen als Längseinsteller für einen Kraftfahrzeugsitz ausgebildet. Die Fahrzeugsitz-Baugruppe 1 weist eine innere, fahrzeugstrukturfeste Unterschiene 3 und eine äußere, sitzstrukturfeste Oberschiene 4 auf, welche gleitend auf der Unterschiene 3 geführt ist. Für die Verriegelung der Schienen 3 und 4 ist eine quer zu den Schienen 3 und 4 beweglich angeordnete Kralle 6 vorgesehen, welche im verriegelten Zustand mit mehreren Fingern die mit entsprechenden Öffnungen oder Aussparungen versehenen Wandungen beider Schienen 3 und 4 durchdringt.

Die Kralle 6 ist zur Führung und Kraftbeaufschlagung auf einem in der Oberschiene 4 in axialer Richtung geführten Bolzen 11 als einem ersten Bauteil befestigt, welcher an dem von der Kralle 6 abgewandten Ende außerhalb der Oberschiene 4 mit einer Scheibe 20 als einem zweiten Bauteil in nachfolgend beschriebener Weise versehen ist. Eine vorgespannte Druckfeder 12, welche zwischen der Außenseite der Oberschiene 4 und der Scheibe 20 angeordnet ist, beaufschlagt über den Bolzen 11 die Kralle mit einer schließenden Zugkraft. Zum Entriegeln der Kralle 6 wird über den in axialer Richtung zu bewegenden Bolzen 11 die Kralle 6 soweit zurückgedrückt, daß sie beide Schienen 3 und 4 freigibt.

Im ersten Ausführungsbeispiel weist der Bolzen 11 über den größten Teil seiner Länge hinweg eine zylindrische Grundform auf, welche die verwendeten Richtungsangaben definiert. An einem axialen Ende ist am Bolzen 11 ein in radialer Richtung vorspringender Flansch 13 angeformt. Im Bereich seines anderen axialen Endes weist der Bolzen 11 eine in radialer Richtung zurückspringende, ringförmige Stufe 15 auf, welche einen zylindrischen Endabschnitt 17 definiert.

Die ringförmige Scheibe 20 weist im Übergangsbereich zwischen ihrer innen liegenden Öffnung und den Stirnseiten jeweils eine Fase 22 von 45° auf. Der Durchmesser der Scheibe 20 ist größer als der Durchmesser des Bolzens 11, beispielsweise so groß wie der Durchmesser des Flansches 13.

Die Scheibe 20 wird auf den Endabschnitt 17 des Bolzens 11 geschoben und in Anlage an die Stufe 15 gebracht. Durch eine Ringnietung wird am Endabschnitt 17 stirnseitig das Material ringförmig eingeschnitten und der weiter außen gelegene Bereich nach außen verdrängt, um als Materialpartie 17' die Scheibe 20 formschlüssig zu hintergreifen, so daß diese in axialer Richtung fixiert ist. Das Hintergreifen erfolgt im Bereich der axial weiter außen angeordneten Fase 22, so daß in axialer Richtung kein Material über die Stirnseite des Endabschnitts 17 und der Scheibe 20 übersteht. Die Stufe 15 definiert somit am Bolzen 11 als einem ersten Bauteil eine bestimmte Stelle, an welcher die Scheibe 20 als ein zweites Bauteil in axialer Richtung fixiert wird.

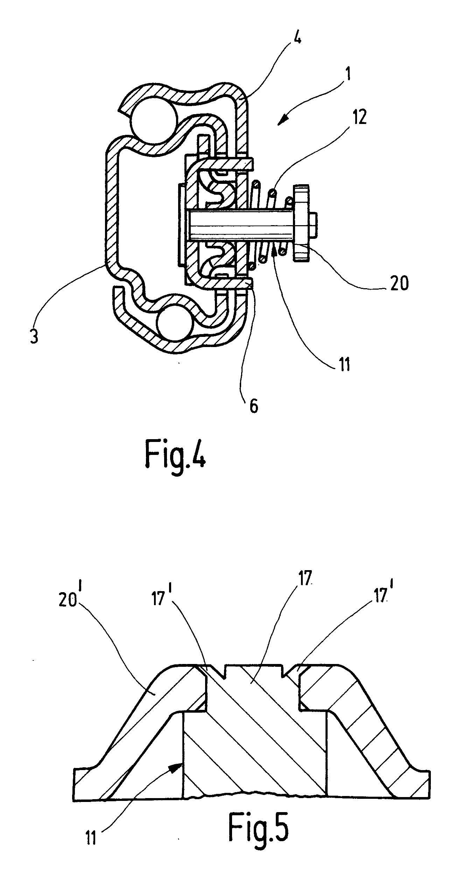

In einer in Fig. 5 dargestellten Abwandlung des ersten Ausführungsbeispiels ist als zweites Bauteil anstelle der Scheibe 20 ein Teller 20' vorgesehen, dessen Rand in Richtung des Flansches 13 gezogen ist. Die Druckfeder 12 sitzt dann mit einigen Windungen innerhalb des Tellers 20', was ein günstigeres Verhalten bei Zusammendrücken bewirkt. Ansonsten stimmt die Abwandlung mit dem ersten Ausführungsbeispiel überein.

Das zweite Ausführungsbeispiel stimmt weitgehend mit dem ersten Ausführungsbeispiel überein, weshalb gleiche und gleichwirkende Elemente um 100 höhere Bezugszeichen tragen.

Der Bolzen 111 weist außer dem Flansch 113, der Stufe 115 und dem Endabschnitt 117 noch eine kegelförmige Zentrieraufnahme 119 auf. Die Zentrieraufnahme 119 ist im stirnseitigen Endabschnitt 117 mittig ausgebildet und verjüngt sich in das Innere des Bolzens 111 hinein.

Die Scheibe 120 mit den Fasen 122 wird in gleicher Weise aufgesetzt. Durch eine Körnernietung wird das Material des Endabschnitts 117, welches die Wandung der Zentrieraufnahme 119 bildet, wenigstens teilweise nach außen verdrängt, wo es im Bereich der entsprechenden Fase 122 die Scheibe 120 formschlüssig hintergreift und in axialer Richtung fixiert.

### Bezugszeichenliste

- 1: Fahrzeugsitz-Baugruppe
- 3: Unterschiene
- 4: Oberschiene
- 6: Kralle
- 11, 111: Bolzen, erstes Bauteil
- 12: Druckfeder
- 13, 113: Flansch
- 15, 115: Stufe
- 17, 117: Endabschnitt
- 17': Materialpartie
- 20, 120: Scheibe, zweites Bauteil
- 20': Teller, zweites Bauteil
- 22, 122: Fase
- 119: Zentrieraufnahme

## Patentansprüche

1. Fahrzeugsitz-Baugruppe, insbesondere Kraftfahrzeugsitz-Einsteller, mit einem ersten Bauteil (11; 111), welches eine axiale Richtung definiert, und einem zweiten Bauteil (20; 20'; 120), welches an einer bestimmten Stelle des ersten Bauteils (11; 111) in axialer Richtung fixiert ist, wobei im Gebrauch der Fahrzeugsitz-Baugruppe (1) die beiden Bauteile (11, 20; 20'; 111, 120) in axialer Richtung auf Zug oder Druck beansprucht werden, **dadurch gekennzeichnet, daß** die beiden Bauteile (11, 20; 20'; 111, 120) durch Verdrängen von Material (17') wenigstens eines Bauteils (11; 111) miteinander verbunden sind.

2. Fahrzeugsitz-Baugruppe nach Anspruch 1, **dadurch gekennzeichnet, daß** beide Bauteile (11, 20; 20'; 111, 120) in axialer Richtung beidseitig formschlüssig miteinander verbunden sind.

3. Fahrzeugsitz-Baugruppe nach Anspruch 1 oder 2, **dadurch gekennzeichnet, daß** die beiden Bauteile (11, 20; 20'; 111, 120) miteinander vernietet sind.

4. Fahrzeugsitz-Baugruppe nach einem der Ansprüche 1 bis 3, **dadurch gekennzeichnet, daß** in einem Endabschnitt (17; 117) des ersten Bauteils (11; 111) eine in axialer Richtung wirksame Stufe (15; 115) ausgebildet ist.

5. Fahrzeugsitz-Baugruppe nach Anspruch 4, **dadurch gekennzeichnet, daß** das zweite Bauteil (20; 20'; 120) an der Stufe (15; 115) anliegt und als eine Scheibe (20; 120) oder als ein Teller (20') ausgebildet ist.

6. Fahrzeugsitz-Baugruppe nach Anspruch 3 und Anspruch 4 oder 5, **dadurch gekennzeichnet, daß** Material (17') des Endabschnitts (17; 117) durch den Nietvorgang wenigstens teilweise nach außen verdrängt ist.

7. Fahrzeugsitz-Baugruppe nach Anspruch 6, **dadurch gekennzeichnet, daß** das verdrängte Material des Endabschnitts (17) aus einer ausgeschnittenen und verdrängten Materialpartie (17') gebildet wird.

8. Fahrzeugsitz-Baugruppe nach Anspruch 6, **dadurch gekennzeichnet, daß** das verdrängte Material des Endabschnitts (117) aus einer verdrängten Wandung einer Zentrieraufnahme (119) gebildet wird.

9. Fahrzeugsitz-Baugruppe nach einem der Ansprüche 6 bis 8, **dadurch gekennzeichnet, daß** das verdrängte Material (17') des Endabschnitts (17; 117) das zweite Bauteil (20; 120) auf der von der Stufe (15; 115) abgewandten Seite hintergreift und fixiert.

10. Fahrzeugsitz-Baugruppe nach einem der Ansprüche 1 bis 9, **dadurch gekennzeichnet, daß** das zweite Bauteil (20; 120) eine Fase (22; 122) aufweist.

11. Fahrzeugsitz-Baugruppe nach Anspruch 9 und 10, **dadurch gekennzeichnet, daß** verdrängte Material (17') des Endabschnitts (17; 117) im Bereich der Fase (22; 122) angeordnet ist.
